# EUROPEAN PATENT APPLICATION

(11) **EP 2 138 036 A2**
(43) Date of publication of application: **30.12.2009**
(21) Application number: 09163788.4
(22) Date of filing: 25.06.2009
(51) Int. Cl.: A01M 1/02

(54) **Monitoring system for predicting external elements harmful to individuals to be protected in spaces to be controlled**

(30) Priority: 27.06.2008 IT FI20080119
(71) Applicant: Spacone, Leonardo, 53045 Montepulciano SI (IT)
(72) Inventor: Spacone, Leonardo, 53045 Montepulciano SI (IT)
(74) Representative: Modiano, Micaela Nadia

(57) **Abstract**

A system for monitoring environmental parameters, comprising at least one plurality of sensors (S1-S3) for detecting and monitoring conditions that are favorable to the presence of external elements that are harmful to individuals (people or animals) to be protected in spaces to be controlled (11; 13, 15).

## Description

The present invention relates to a monitoring system for predicting external elements harmful to individuals to be protected in spaces to be controlled.

Systems are known which allow to control individuals kept in (semi)automated shelters.

In particular, animal shelters are known which are provided with automatic systems capable of controlling the sheltered animals.

For example, US 6,864,914 discloses a system for controlling at least part of an animal related space that uses a plurality of control video cameras to monitor the behavior of the animals and electronic devices capable of receiving instructions from outside and of executing them within the space as a function of their behavior.

EP1212939 discloses a management system for an animal shelter that comprises a plurality of video cameras and an electronic computer for controlling the animals held in the shelter in any position thereof of a preset area. The system can also identify the animal being observed.

The main drawback of these automated control systems for animal shelters is that it is not possible to protect the animals against external factors.

Systems are also known which are capable of capturing and counting insects.

For example, US 6,516,558 discloses a system for capturing and monitoring insects which comprises a deformable cardboard container, inside which glue is spread in order to retain the insect and which has a grille for viewing and optionally counting the captured insects.

This insect capturing and monitoring system allows to assess their presence only after capture by means of the trap; further, the presence and the distribution of the insects over a specific period of time is determined by an operator manually.

Currently, therefore, despite the developments of technology, it is problematic, and the need is felt, to provide automated monitoring systems for individuals in preset areas that have advanced functions and more accurate and specific monitorings as a function of particular requirements and at the same time are simple and cheap to design and use.

The aim of the present invention is to provide a monitoring system for environmental parameters that has advanced functions and is innovative and a corresponding shelter for the accommodated individuals.

This aim is achieved with a monitoring system according to claim 1 and with a shelter for individuals according to claim 16.

According to a first aspect, the invention relates to a monitoring system that comprises at least one plurality of sensors for detecting and monitoring conditions that are favorable to the presence of external elements that are harmful for individuals to be protected in spaces to be monitored, and at least one processing unit that is adapted to receive and process the data from said sensors.

The term "individuals" is understood to reference human beings or animals.

The expression "harmful external elements" advantageously is understood to reference any animal or plant that can be dangerous or harmful for the health of the individuals, be they human beings or animals, i.e., can carry infectious diseases or cause discomfort to the individuals to be protected, such as for example insects or pollens or dust or others.

In particular, the harmful insects can be fleas, ticks, mosquitoes.

More particularly, the mosquitoes can be so-called sand flies (whose scientific name is "Phlebotomus papatasi") or mosquitoes that carry meningitis, filariasis, or others.

The conditions favorable to the presence of such harmful external elements are advantageously and preferably environmental parameters or conditions that are identified by critical values or ranges, due to which one or more of such harmful external elements can be activated or spread.

Advantageously, these environmental parameters or conditions are at least one of the following: chemical parameters, physical parameters, spatial parameters, time parameters, such as for example brightness, temperature, humidity of the air or of the soil, wind, atmospheric pressure, rainfall, the time and date, the intensity of electromagnetic fields, the number of harmful external elements per unit volume, or others.

Obviously, the possibility to include additional parameters to be controlled as a function of particular requirements must not be excluded.

Therefore, the occurrence of one or more of such critical environmental parameters allows to hypothesize the presence of a harmful external element in the area subjected to control.

For example, the above cited sand fly is a dipteran nematoceran of the Psychodidae family that mainly bites from May to October and preferably from sunset to sunrise and is found generally in areas close to the sea or in tropical regions. This insect can carry diseases such as leishmaniasis, the main agents of which are parasites that belong to protozoa, such as for example the parasite known as "Leishmania infantum", which is active especially in Mediterranean areas and is capable of affecting mostly dogs but often human beings as well.

There are no commonly inhabited regions that can be considered completely safe against the action of the sand fly, since there have been many reports in recent years of cases of canine leishmaniasis from areas traditionally believed to be free of the disease, for example from northern Italy. Indeed, although until 1989 northern Italy was considered practically free from canine leishmaniasis, today there are ascertained outbreaks in many regions of northern Italy. In these areas, colonization may have occurred spontaneously from coastal regions or as a consequence of increased movement of people from the Mediterranean areas in which phlebotomines are abundant. On the basis of climate analogies and environmental characteristics, it can also be predicted the spread of the disease to extend in the near future to other regions of central Europe.

Leishmaniasis affects the dog bitten by the infected insect and in the worst cases can even lead to the death of the animal. A dog that is found positive to the test, however, can live for a long time before it exhibits symptoms, but can spread the disease nonetheless. Moreover, Leishmaniasis is an anthropozoonosis, i.e., a disease that can be transmitted, in some particular conditions, to a man as well (see human leishmaniasis), but is not transmitted directly from dog to dog or from dog to person: the protozoon, in order to become infectious, must in fact first perform in the phlebotomine part of its biological cycle. In man, in any case, this disease does not have effects as severe as for dogs and generally leads to symptoms such as headaches, shivers, retroorbital pain, myalgias, asthenia and abdominal pains.

In an advantageous embodiment of the invention, the spaces to be controlled are preferably animal shelters, such as for example kennels or the like; clearly, it should not be excluded the possibility to control different spaces, such as for example shelters for human beings, such as the exterior and/or interior of civil dwellings or open spaces, such as parks, gardens, public facilities or others.

The shelters of the individuals to be controlled advantageously and preferably have an open area and a protection area, which are mutually connected so as to allow the transit of the individuals from one area to the other, as described below.

The sensors of the detection system according to the invention can be arranged advantageously inside and/or outside the shelters to be monitored, so as to control both the space inside the shelter and an external area that is more or less broad.

In a preferable embodiment of the invention, there is a plurality of local control units, each of which comprises at least one of such sensors and a transmission system for sending the detected or monitored parameters to such processing unit. These local units can be installed inside and/or outside the area to be controlled so as to provide a detection system that is particularly simple and versatile to build and install.

The transmission system can be provided by means of a local transmission network of the star or bus or ring or grid or mesh or other type.

In general, the expression "local network" (also known as LAN, Local Area Network) is used to reference a network constituted by electronic computers that are mutually connected within a delimited space.

Briefly, the most common types of local network or LAN for mutually connecting a plurality of electronic computers are:
- star, characterized by a central point or star center, which is connected to every electronic computer of the network;
- bus, in which the electronic computers of the network are mutually connected by a linear wired connection;
- ring, in which the electronic computers of the network are connected to each other, forming a circle so that only one computer at a time can transmit data;
- grid or mesh, in which the electronic computers of the network are mutually connected in order to exchange data related to each computer.

The local network or LAN that can be associated with a system according to the invention is advantageously adapted to connect a plurality of local control units to at least one central unit, and is advantageously and preferably of the star type, i.e., each local unit sends and receives the data/commands to and from the central unit (central point or star center). As an alternative to the network of the star type, it is possible to provide a local network or LAN of the grid or mesh type, particularly but not exclusively if provisions are made for installing some of the local units outside the range of action of the central unit or star center. In this manner it is possible to connect the furthest local units to the nearest local units and create a radio link toward the central unit; in other words, each local unit sends and receives its own data/commands and, if necessary, can act as a bridge for other units that otherwise would not be able to communicate with the central unit.

In this manner it is therefore possible to monitor spaces of considerable size with a communications network that is particularly simple and cheap.

Obviously, it should not be excluded that the local network might be provided of any other type, as a function of particular requirements or applications.

In a particularly advantageous embodiment of the invention, the local network is of the dynamic type, i.e., it is possible to insert new units as a function of particular requirements that can arise during use.

In an advantageous embodiment, the local transmission network is of the radio link type, such as for example of the radio frequency type or the like, i.e., it is provided by means of a radio frequency communication system that is adapted to transmit remotely information that is appropriately encoded. The capacity available for transmission depends on the radio spectrum, i.e., on the frequency range or radio channel, and on the complexity of the modulation used.

The local units can be arranged advantageously inside or also outside the space to be controlled. Monitoring can be activated in a predefined and presettable time interval in order to monitor any presence of particular harmful elements, for example over a day or a season or a year.

In the preferred embodiment of the present invention, there are actuators or protection systems for the individuals to be protected, which can be activated automatically when the monitoring system detects the environmental parameters that are favorable to the presence of at least one harmful element, in order to avoid contact therewith, protecting the individuals. These protection systems also can be connected advantageously to the processing unit by means of such communication systems so as to transmit data and commands to or from it.

These protection systems can remain active until at least some of the monitored environmental parameters shift away from the critical conditions, without the need to provide an intervention of an operator.

Advantageously, it is possible to provide traps in order to capture and optionally count and classify the type of harmful element (for example the type of insect) that might be in the area being controlled. In this case, it is possible to provide a step for self-learning of the monitoring system, in which the environmental parameters are monitored and correlated to the type and number of harmful elements captured, in order to create such threshold values in an automated and/or manual manner. In this case, it is further possible to study the evolution of the environmental conditions and the consequent presence of a specific harmful element in a predefined area, on the basis of past data and on the basis of the data observed at the time of analysis.

In another advantageous embodiment, the space to be monitored is an area to be urbanized and the detection system according to the invention can be used to perform preliminary studies aimed at verifying the feasibility of such urbanization, such as for example the building of civil dwellings or the installation of animal farms, in order to avoid creating an installation in an area that is critical due to the possible presence of such harmful elements.

According to another aspect, the present invention relates to a shelter for individuals which comprises a detection system as described above.

An advantage of the monitoring system according to the invention is that it is simple and cheap to provide and in use.

Another advantage is that it is possible to monitor the presence of different types of external harmful element and to monitor areas of different extension and shape in a very simple and effective manner.

Another advantage is that the system according to the invention is extremely versatile, since it can be used easily both to protect individuals (people or animals) within a predefined area and to avoid urbanizations in an area where the environmental conditions can be favorable to the presence of harmful external elements. Further, such system can be implemented very easily with different known control devices or systems, such as for example systems for controlling the behavior of animals or others.

An advantage of an embodiment of the invention is that it is particularly effective, in particular because the possible presence of harmful external elements in a preset area is predicted in advance in order to activate protection systems so as to avoid in advance contact with the individuals to be protected. Further, it is nonetheless possible to activate these protection systems as soon as such contact has occurred, thus minimizing any damage or inconvenience (or any infectious diseases) to the individuals to be protected.

Moreover, such system is not particularly invasive for the individuals to be protected.

Further, it is possible to activate the protection systems automatically only when the presence of harmful external elements can be hypothesized, achieving a considerable saving of resources, such as for example of insecticides or electric power. Moreover, the protected individuals are not forced to mandatory isolation on the basis of schedules, periods or other forms of prior scheduling, as occurs today, but are isolated and protected only when the environmental parameters indicate that at least one critical environmental condition has been reached. As soon as such critical environmental condition has ceased, the protection devices are deactivated and the individuals to be protected are freed, in order to move into the available areas, avoiding useless periods of alert.

Further advantageous characteristics and embodiments of the method and of the device according to the invention are indicated in the appended claims and are described further hereinafter with reference to non-limiting examples of embodiment.

Further characteristics and advantages of the invention will become better apparent from the following detailed description of some preferred but not exclusive embodiments thereof, illustrated by way of non-limiting example in the accompanying drawings, wherein:
Figure 1 is a schematic view of a monitoring system according to one embodiment of the invention;
Figure 2 is a view of an animal shelter that comprises the monitoring system of Figure 1.

With reference to the figures, in which identical numerals correspond to identical parts in all the figures, a monitoring system according to the invention is designated by the reference numeral 1, and comprises a plurality of local control units U1, U2, U3, U4, U5, each of which has a plurality of sensors S1, S2, S3 adapted to detect environmental parameters; the units are connected to a processing unit U0 by means of a local transmission network (designated schematically by the arrows F1), in order to send the acquired data or values of the environmental parameters to the processing unit U0.

Clearly, the number and type of the units U0-U5 and of the sensors S1, S2, S3 can vary as a function of specific applications.

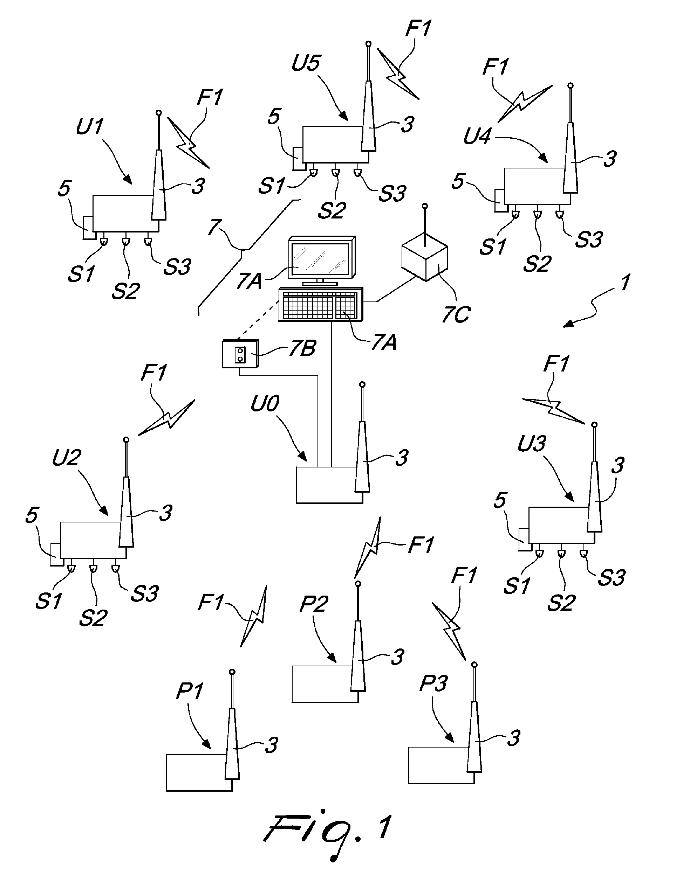

In particular, in the embodiment shown in Figure 1, each one of the local control units U1, U2, U3, U4, U5 comprises a sensor S1, which is adapted to detect ambient brightness, a sensor S2 for detecting the intensity of the wind, and a sensor S3 for detecting the atmospheric temperature and a communication device 3 for providing the local transmission network, which can be for example of the radio frequency radio link type.

At least some of the local units U1, U2, U3, U4, U5 can further comprise a trap 5 for capturing and optionally counting and classifying any harmful external elements, as described below.

The processing unit U0 preferably comprises another communication device 3 and further comprises advantageously a user side communication interface 7 to manage the actions to be undertaken, and to update and control the operation of the system remotely. The communication interface 7 can be provided by means of a plurality of different devices, such as for example by means of a personal computer 7A, which is optionally connected to an Internet network 7B or to a GSM system 7C capable of long-distance communication.

Advantageously, the central unit U0 is adapted to store the critical threshold values of the environmental parameters to be monitored in order to predict the presence of at least one type of insect and optionally the period of activation of the monitoring.

For example, if the harmful insects to be monitored are sand flies, an operator can store in the system at least the following critical threshold values: environmental temperature higher than 14°C; wind less than 5 knots; twilight lighting from 5 p.m. to 8 a.m.

In this manner, the system 1 can predict the presence of sand flies when these critical conditions occur simultaneously and activate automatically protection systems or actuators P1, P2, P3, P4, P5, in order to protect the individuals when such critical conditions occur.

It is clearly possible to consider different environmental conditions and/or critical values to be monitored in order to predict the possible presence of different types of harmful external element (insects, animals, pollens, dust or others); it is further easy to provide for the possible simultaneous presence of different types of harmful external element, providing a particularly versatile and efficient system.

It is further possible to provide a table that contains the various parameters learned during the test periods, which are usable to set other control systems in different geographical areas without having to repeat the learning procedure every time.

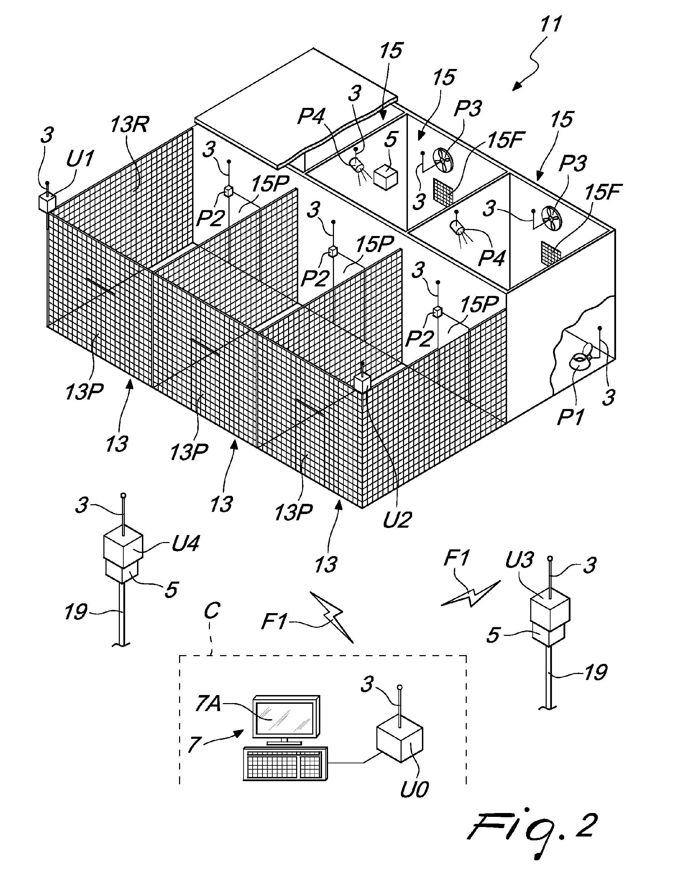

Figure 2 is a view of an animal shelter 11, particularly for dogs but not only, which is provided with a plurality of open spaces or cages 13, each of which is matched by a respective protective space or kennel 15 for one or more animals.

Each cage 13 is provided with a perimetric net 13R, in which an entrance door 13P is provided through which the animal is to be introduced; each kennel 15 is further provided with a prefabricated structure that has windows 15F with mosquito nets and an entrance door 15P that connects it to the cage 13.

It is evident that the shelter 11 is shown schematically therein by way of example and can be of any other shape or arrangement.

In the shelter 11, the detection system 1 is associated so as to control the environmental parameters in order to check when the environmental conditions favorable to the presence of external elements that are harmful for the animals accommodated therein occur.

In particular, the detection system 1 can monitor the environmental conditions both inside the cages 13 and in an area that surrounds the shelter 11.

More particularly, Figure 2 illustrates the local units U1, U2 of the detection system 1, which are arranged at the ends of the shelter 11, the local units U3, U4 arranged on appropriately provided supporting structures 19 at a distance from the shelter 11 and the central unit U0 in a control room C of the kennel.

Advantageously, there is further a plurality of actuators or protection systems P1-P4, provided at least with the following devices: calling devices P1 in order to attract the animals inside each kennel 15, such as for example a bowl of food with controlled opening; insulation devices P2 for the animals in the kennels 15, such as for example devices for closing the access doors 15P; ventilation or conditioning devices P3 in order to repel any insects and/or other animals and/or pollens and/or harmful dust from any kennel 15, for example fans connected to the outside; dispensing devices P4 for repellent substances, in order to introduce in any kennel 15 substances that are capable of killing or sending away any insects. Each protection system P1-P4 advantageously comprises the communication system 3 for receiving the commands from the central unit U0 so that it can be activated remotely and automatically.

In an advantageous embodiment of the invention it is possible to provide traps 5 for capturing and optionally counting and classifying the type of insects that are present in the shelter 11.

These traps can be associated with at least one of the local units U1-U4 or can be arranged independently of them, for example inside the kennels 15, and can be provided by means of an open container inside which a bait is placed in order to attract the harmful insects, or it is possible to use light or the production of CO₂ to attract the insects.

Systems capable of counting or classifying insects can be provided for example by means of small video cameras or still cameras and an additional communication system 3 for sending the acquired images to the central unit U0.

It is further possible to provide traps for capturing and optionally counting and classifying other types of harmful external element, be they other animals or pollens or the like, as a function of particular applications.

When the detection system 1 detects the end of at least one of the critical conditions, the actuators P1-P4 can be deactivated.

Advantageously, the space to be monitored can be of any other type, for example it can be a civil building and at least one open garden connected to at least one dwelling.

In this case, it is possible to provide actuators or protection systems which can be activated automatically if such favorable environmental conditions are detected and are partly placed in the garden, in order to warn the occupants, and partly arranged on the doors or windows of the dwelling in order to prevent entry to the harmful external elements.

In another embodiment, the monitoring system 1 can be installed in an area to be built up, in order to avoid urbanization if environmental conditions favorable to the presence of the harmful external elements are detected during at least one specific time period.

Moreover, in another embodiment, the monitoring system 1 can be installed in a public space, such as for example a playground or a public park.

In this last case, the actuators or protection systems can report or alert the individuals to be protected, i. e., the users of the public space, when the conditions favorable to the presence of the harmful external elements are detected and can be provided by means of light-emitting or sound-emitting systems or others.

It is understood that what is shown is only a possible non-limiting embodiment of the invention, which can vary in the shapes and arrangements without abandoning the scope of the protection of the appended claims.

The disclosures in Italian Patent Application No. FI2008A000119 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A monitoring system comprising at least one plurality of sensors (S1-S3) for detecting and monitoring conditions that are favorable to the presence of harmful external elements for individuals to be protected in a space to be controlled (11; 13, 15) and at least one processing unit (U0) adapted to receive and process the data from said sensors (S1-S3).

2. The system according to claim 1, **characterized in that** said favorable conditions are critical environmental parameters or conditions due to which one or more of said harmful external elements may be activated or spread in said space to be controlled (11; 13, 15).

3. The system according to claim 1 or 2, **characterized in that** said harmful external elements are animals or plants that can be harmful or dangerous for the health of said individuals, for example by carrying infectious diseases or by causing discomfort.

4. The system according to one or more of the preceding claims, **characterized in that** said space to be controlled (11; 13, 15) comprises at least one open area (13) and a protection area (15), which are mutually connected so as to allow the transit of said individuals from one area to the other.

5. The system according to one or more of the preceding claims, **characterized in that** said sensors (S1-S3) are arranged inside and/or outside said space to be controlled (11; 13, 15).

6. The system according to one or more of the preceding claims, **characterized in that** it comprises a plurality of local control units (U1-U5), each of which comprises at least one of said sensors (S1-S3) and at least one communication device (3) in order to send said detected or monitored conditions to said at least one processing unit (U0).

7. The system according to claim 6, **characterized in that** said communication device (3) is provided by means of a local transmission network (F1) of the star or bus or ring or grid or mesh or other type.

8. The system according to claim 7, **characterized in that** said local transmission network (F1) is of the radio link type, such as for example of the radio frequency type or the like.

9. The system according to one or more of the preceding claims, **characterized in that** it comprises actuators or protection systems (P1-P4) for said individuals in said space to be controlled (11; 13, 15), which can be activated if said conditions favorable to the presence of said harmful external elements are detected.

10. The system according to claim 9, **characterized in that** said protection systems (P1-P4) each comprise at least one communication device (3) for communicating data or commands to or from said central unit (U0) so that they can be activated remotely automatically.

11. The system according to claim 9 or 10, **characterized in that** said protection systems (P1-P4) are arranged in a protection space (15) of said space to be controlled (11) and are provided by means of at least one of the following:
- a calling device (P1) for attracting the individuals from an open space (13);
- an isolation device (P2) for isolating the individuals from outside;
- a ventilation or conditioning device (P3) for repelling any harmful external elements that might be present;
- a dispensing device (P4) for repellent substances, in order to introduce substances capable of removing or killing said harmful external elements;
- a trap (5) for capturing or retaining said harmful external elements if present, with optional systems for counting or classifying said harmful external elements.

12. The system according to at least one of the preceding claims, **characterized in that** said spaces to be monitored are areas to be built, so as to avoid urbanization if said conditions favorable to the presence of said harmful external elements occur during at least one specific time period.

13. The system according to at least one of the preceding claims, **characterized in that** said spaces to be monitored are public spaces and said actuators or protection systems are adapted at least to report or alert said individuals, i.e., the users of the public space, when said conditions favorable to the presence of said harmful external elements are detected.

14. A shelter (11) for individuals to be protected, **characterized in that** it comprises at least one monitoring system (1) according to at least one of claims 1 to 11.

15. The shelter according to claim 14, **characterized in that** it comprises at least one open area (13) and at least one protection area (15), which are mutually connected so as to allow the transit of said individuals from one area to the other area.
